Europäisches Patentamt

European Patent Office

Office européen des brevets

(11) Veröffentlichungsnummer: **0 294 782 B1**

(12) **EUROPÄISCHE PATENTSCHRIFT**

(45) Veröffentlichungstag der Patentschrift: **18.03.92**

(21) Anmeldenummer: **88109126.8**

(22) Anmeldetag: **08.06.88**

(51) Int. Cl.⁵: **B65D  88/12**

(54) **Mehrzweckpalette.**

(30) Priorität: **10.06.87 DE 3719301**

(43) Veröffentlichungstag der Anmeldung:
**14.12.88 Patentblatt  88/50**

(45) Bekanntmachung des Hinweises auf die
Patenterteilung:
**18.03.92 Patentblatt  92/12**

(84) Benannte Vertragsstaaten:
**AT BE FR GB IT**

(56) Entgegenhaltungen:
**EP-A- 0 094 037        BE-A- 760 655**
**DE-A- 3 107 416        DE-A- 3 138 349**
**DE-A- 3 217 746        DE-A- 3 316 412**
**FR-A- 1 505 400        FR-A- 2 476 605**
**FR-A- 2 479 411        US-A- 2 640 620**
**US-A- 2 828 931**

(73) Patentinhaber: **DORNIER GMBH**
**Postfach 1420**
**W-7990 Friedrichshafen 1(DE)**

(72) Erfinder: **Frischknecht, Erich**
**Schlehenweg 12**
**W-7990 Friedrichshafen(DE)**
Erfinder: **Reppisch, Hellmut**
**Sommerweg 24**
**W-7990 Friedrichshafen 24(DE)**

(74) Vertreter: **Landsmann, Ralf, Dipl.-Ing.**
**Kleeweg 3**
**W-7990 Friedrichshafen 1(DE)**

# Beschreibung

Die Erfindung betrifft eine Mehrzweckpalette zum Transport auf Lastkraftwagen, enthaltend einen ebenen oder einen quaderförmigen Metallrahmen aus ISO-Ecken und Kantenprofilen.

Aus der DE-OS 32 17 746 und der DE-OS 33 16 412 sind Kabinen zur Aufnahme von Geräten und Bedienungspersonal bekannt, welche transportierbar sind und einen Metallrahmen mit Eckbeschlägen besitzen, wodurch die Kabinen auf Lastfahrzeugen leicht lösbar befestigt werden können. Diese Kabinen haben die Form eines geschlossenen Quaders.

Aufgabe der Erfindung ist es, ausgehend von den bekannten Kabinen ein Palettensystem vorzuschlagen, das mit wenigen Grundelementen für viele Einsatzzwecke variabel ausgestaltbar ist.

Diese Aufgabe wird erfindungsgemäß gelöst von einer Mehrzweckpalette mit den im Anspruch 1 angegebenen Merkmalen.

Verschiedene Weiterbildungen sind Gegenstände von Unteransprüchen.

Die Erfindung kommt mit relativ wenig Bauteilen aus, die niet- und schweißfrei miteinander verbunden werden können und eine hohe Variabilität besitzen. So sind, ähnlich einem Baukastensystem, verschiedene Ausführungen von Kabinen, Paletten oder Gehäuse und Aufbauten möglich. Das erfindungsgemäße System ist ausbaubar kostengünstig und leicht veränderbar. Die erfindungsgemäßen Hohlprofile mit C-Schienen an zwei oder mehr Seiten lassen eine große Freiheit im Anbringen von Zubehör oder von Strukturbauteilen.

Die Erfindung wird anhand von siebzehn Figuren näher beschrieben.

Es zeigen:

Figuren 1 bis 3

die einzelnen Elemente und den Aufbau einer erfindungsgemäßen Mehrzweckpalette,

Figuren 4 bis 17

Ausführungsformen von erfindungsgemäßen Mehrzweckpaletten.

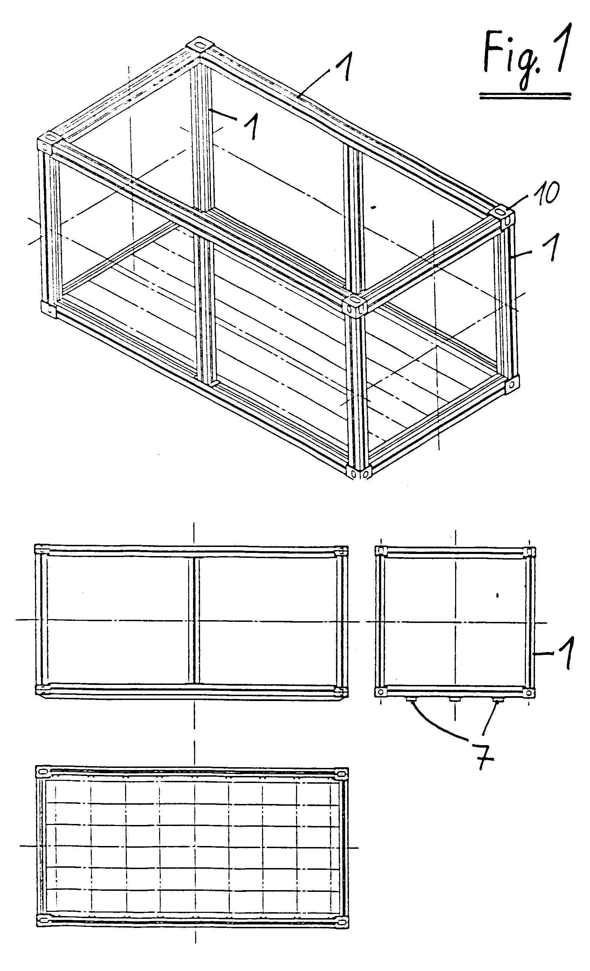

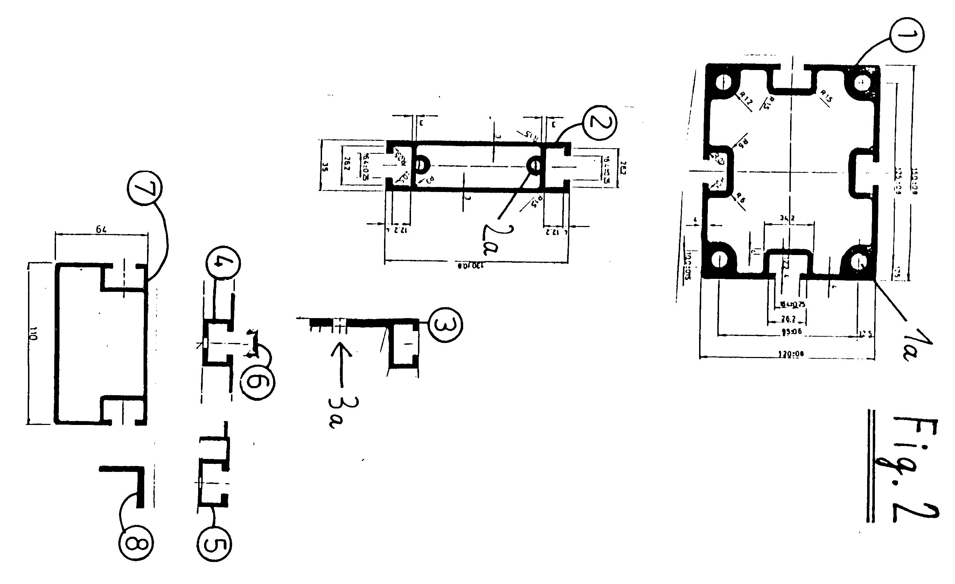

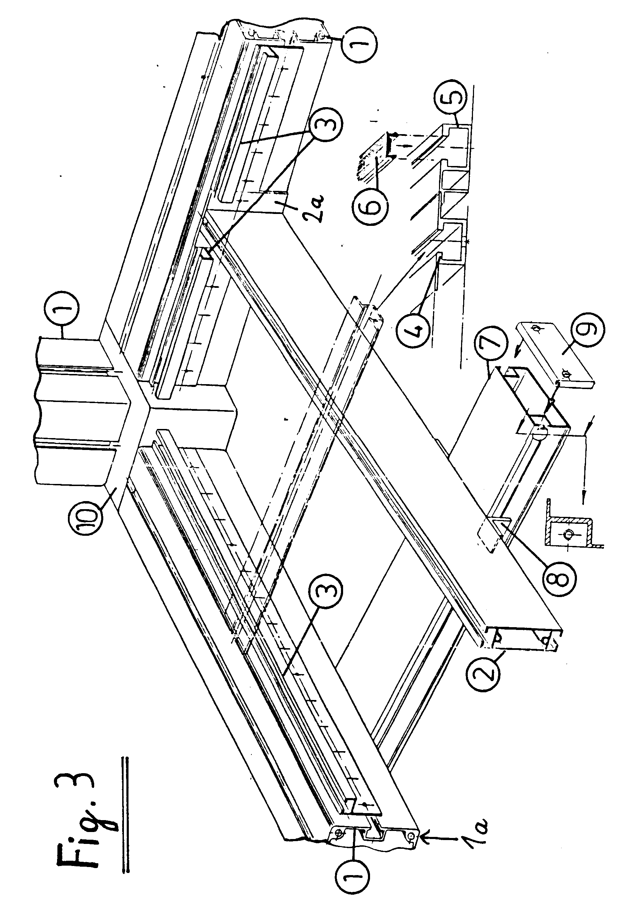

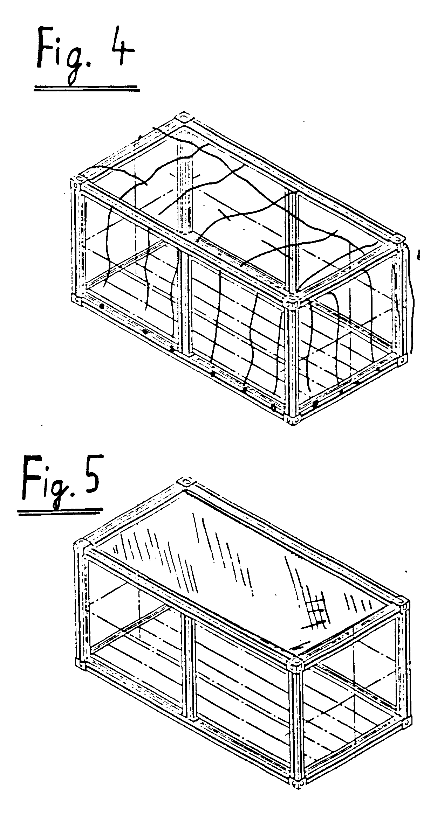

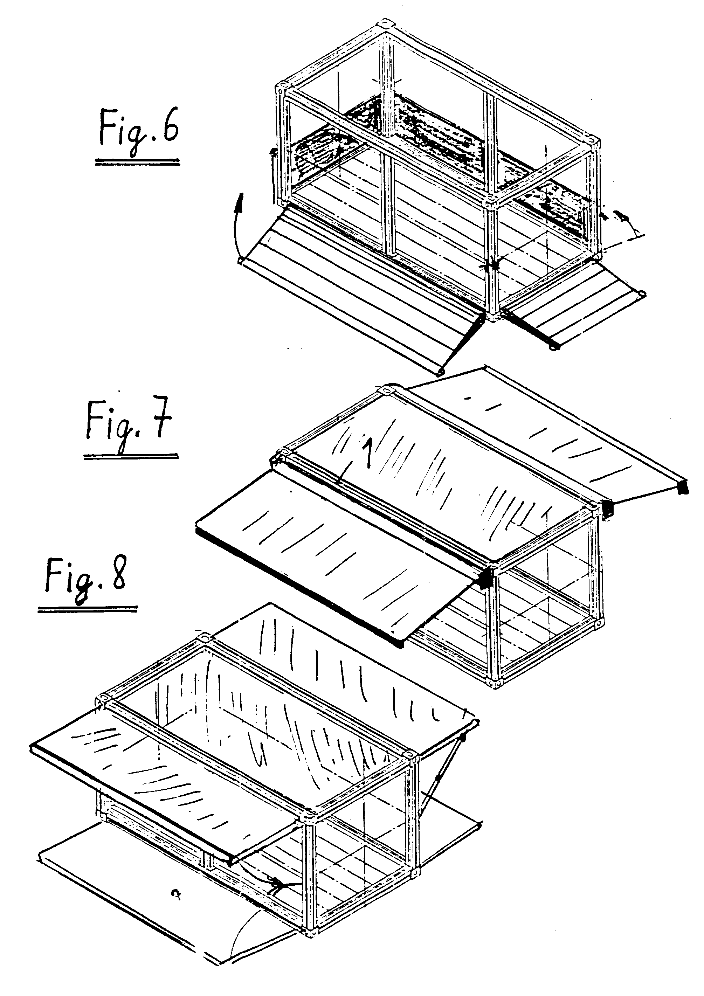

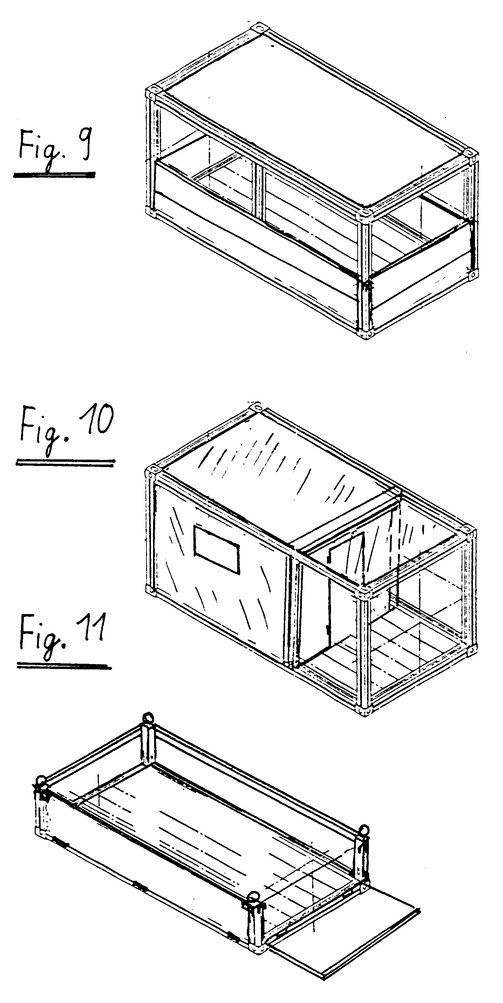

Figur 1 zeigt eine erfindungsgemäße Ausführungsform einer Mehrzweckpalette mit quaderförmigen Rahmen aus den Hohlprofilen 1, die mit ISO-Ecken 10 zusammengefügt sind. Deutlich zu erkennen sind die C-Schienen, die in dieser Ausführung auf allen vier Seiten der Hohlprofile 1 eingelassen sind und die die Variabilität des Systems begründen. In Figur 1 unten sind in der Voreransicht die Schienen 7 zu erkennen. In der Draufsicht ist ein eingelegter Boden zu erkennen.

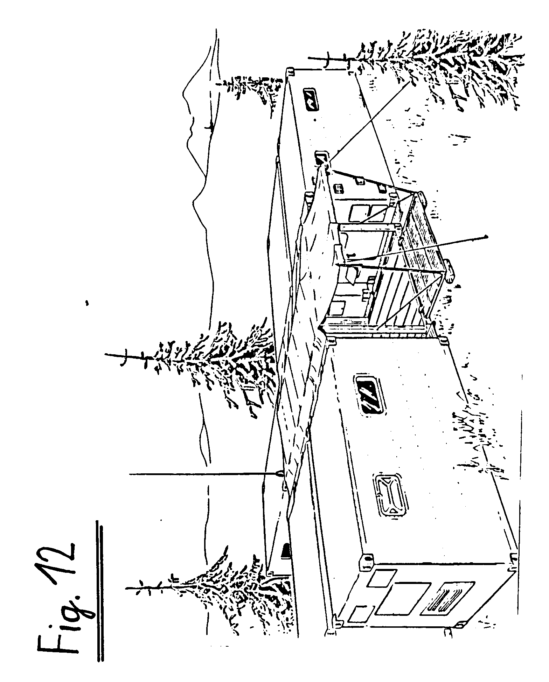

Figur 2 zeigt die einzelnen Bauteile dieser Ausführungsform. Alle Teile sind hier Strangpreßprofilteile aus Aluminium, jedoch sind andere Werkstoffe jederzeit einsetzbar. Die Hohlprofile 1 haben einen vierkantigen Querschnitt und sind auf allen vier Seiten mit C-Profilen ausgestattet. Die Hohlprofile 1 weisen hier vier durchgehende Schraubkanäle 1a zur Befestigung der ISO-Ecken auf. Die Bemaßung ist hier beispielhaft angegeben, die Erfindung jedoch nicht auf diese Bemassung beschränkt. Die schmalen Profilteile 2 weisen neben den Schraubkanälen 2a jeweils auf ihren Schmalseiten zwei C-Schienen auf. Bauteil 3 hat die Form eines h und besteht aus einer C-Schiene mit einem langen Arm, der Befestigungslöcher 3a zum Anschrauben an weitere C-Schienen besitzt. Die Teile 4 und 5 dienen z.B. zum Halten eines Holzbodens.

Die C-Schienen, die im Innenraum betreten werden, sind durch Abdeckkappen 6 geschützt. Bauteil 7 zeigt eine Ausführungsform von Schienen wie sie, bevorzugt in doppelter Ausführung, zum Ziehen der Mehrzweckpaletten verwendet werden. Schiene 7 hat hier ein hohlkastenförmiges Profil und zwei C-Schienen auf ihren Schmalseiten, wodurch die Befestigungsmöglichkeiten beliebig wählbar sind. Winkelteil 8, das auf jedem seiner Winkel mindestens ein Schraubloch enthält, dient zur Befestigung der Schiene 7 am Boden der Mehrzweckpaletten.

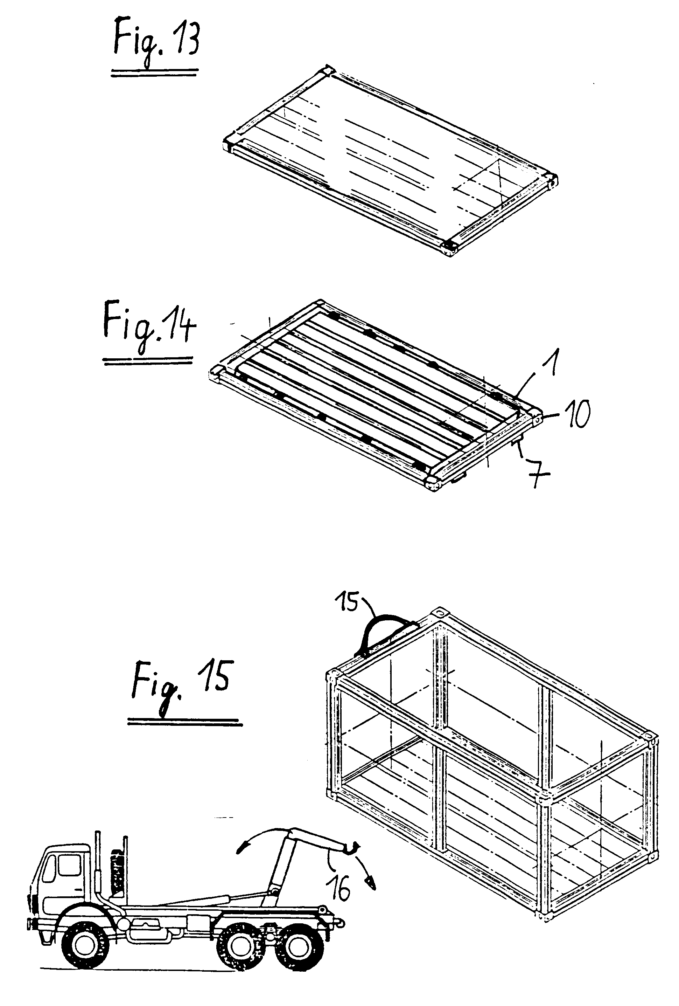

Figur 3 zeigt einen Ausschnitt einer erfindungsgemäßen Mehrzweckpalette, in dem alle Bauteile Verwendung finden. Das Gerüst der Palette besteht aus den Hohlprofilen 1, die an den ISO-Ecken 10 miteinander verschraubt sind. Der Boden wird von den schmalen Profilen 2 getragen, die hier über Abschlußplatten 2a an den Hohlprofilen 1 befestigt (angeschraubt) sind. Zum Einsetzen von Bodenplatten sind die h-förmigen Randprofile 3 vorgesehen, die in den nach innen gewandten C-Schienen der Hohlprofile 1 verschraubt sind. Auf den Bauteilen 2 und 3 ruhen die C-Schienen profile 4 und 5, deren nach oben offene C-Schienen durch Abdeckungen 6 geschützt sind. Sie dienen zur Aufnahme von Geräten und zur Lagerung von Bodenelementen wie z.B. Holzbrettern. Die Anordnung und die Anzahl der Elemente 4 und 5 ist variabel.

Die Schiene 7 ist mit den Winkelteilen 8 am Boden, also an Hohlprofilen 1 und an Profilen 2 ebenfalls durch Schraubung befestigt. Eine Abdeckplatte 9 schützt den Innenraum der Schiene vor Verschmutzung.

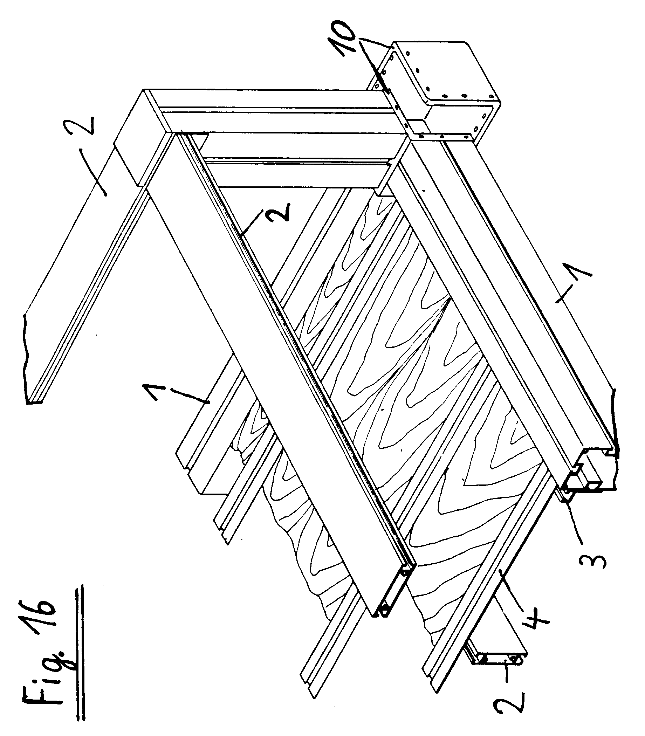

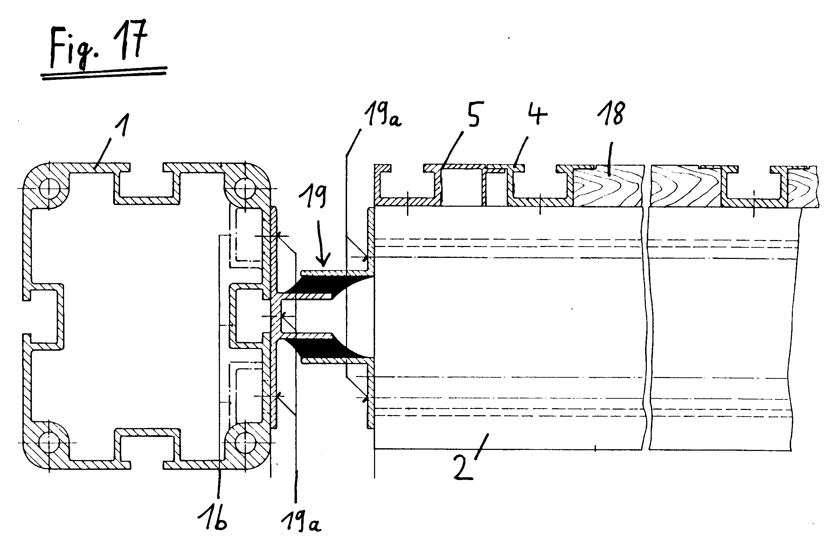

Die folgenden in den Figuren 4 bis 17 gezeigten Ausführungen sind untereinander kombinierbar.

Figur 4 zeigt eine Ausführung der Mehrzweckpalette, die mit einer Abdeckplane, die einer gebräuchlichen Lkw-Abdeckung entspricht, verschließbar ist.

Figur 5 zeigt eine Ausführungsform mit teilweise festen Wänden oder Decken mit variablen Plattenausführungen.

Figur 6 zeigt eine Ausführung mit Auffahrrampen, die abnehmbar oder klappbar sind. Bei Benützung der Palette mit Bordwänden sind integrierte C-Schienen in der Bordwand möglich. Die C-Schienen dienen bei hochgeklappten Bordwänden zur transportsicheren Aufnahme von Geräten und Zubehör (z.B. Kanister oder Kabeltrommeln).

Figur 7 zeigt eine Ausführungsform, die mit Markisen an den oben verlaufenden Hohlprofilen 1 ausgerüstet ist. Die Markisen sind bevorzugt abnehmbar befestigt. Ebenso ist eine Rolladenmontage auf allen Seiten möglich, die jedoch nicht gezeigt ist.

Figur 8 zeigt eine Ausführung mit teilweise oder voll aufklappbaren Seitenwänden.

Figur 9 zeigt eine Ausführung mit festem Dach und halbhohen Seitenwänden, die sich besonders für eine Ausrüstung mit Planenabdeckung eignet.

Figur 10 zeigt eine Ausführung, bei der ein abgetrenntes geschlossenes Raumteil und ein offenes Palettenteil vorgesehen ist, wobei das offene Palettenteil mit einer Deckenplatte oder einer Plane geschlossen sein kann.

Figur 11 zeigt eine Ausführung mit Bordwänden, die fest, steckbar oder klappbar ausgebildet sein können. Bevorzugt enthalten auch die Bordwände integrierte C-Schienen. Eine Hebemöglichkeit für die Palette ist über ISO-Ecken oder Ringösen möglich. Eine weiter Ausführungsform mit niedrigen Bordwänden ist in Figur 16 gezeigt.

Figur 12 zeigt eine Ausführungsform einer erfindungsgemäßen Palette, die als Zwischenteil z.B. zwischen fünf bekannten Kabinen vorgesehen ist, und die zum Zusammenkoppeln der anderen Kabinen dient. Sie kann ein ausstellbares Planen-oder ein Festdach haben und Auffahrrampen. Statt der Kabinen lassen sich auch erfindungsgemäße Mehrzweckpaletten mit festen Seitenwänden und Dächern verwenden. Die hier gezeigte Ausführung erlaubt den Zusammenbau von größeren Einheiten aus einzelnen Sheltern oder Kabinen.

Figur 13 zeigt eine Flachpalette mit ebenem Metallrahmen und ISO-Ecken. Der Boden besteht aus den Elementen 2, 3, 4, 5, 7 und 8, wie in Figur 16 vergrößert dargestellt.

Figur 14 zeigt eine Ausführungsform als Flachpalette mit einem ebenen Rahmen, bestehend aus den Hohlprofilen 1 und den ISO-Ecken 10, sowie mit Schienen 7 und 8. Der Boden besteht hier aus den Bauteilen 2, 3, 4, 5, und Laufflächen, z.B. Holzbrettern. Der Boden ist schwingungsgedämpft. Der Montageort und die Menge der Schwingungsdämpfer ist variabel. In dieser Ausführung sind die Schwingungsdämpfer in Längsrichtung verlaufend gezeigt.
Eine vergrößerte Darstellung dieses Bodens ist in Figur 17 gezeigt.
Figur 15 zeigt eine Ausführung, die mit einem Aufnahmemittel 15 ausgerüstet ist. Das Aufnahmemittel 15 und seine Anordnung sind einem an sich bekannten Container-Aufnahmesystem angepasst.

Gezeigt ist weiterhin ein an sich bekannter Lastkraftwagen mit einem Haken 16, der zur Aufnahme der Mehrzweckpalette der Figur 15 in das Aufnahmemittel 15 eingreifen kann und die Palette auf die Ladepritsche ziehen kann.

Figur 16 zeigt eine Ausführung mit niedrigen Bordwänden, die von den schmalen Profilen 2 gebildet sind. In der innen rundum verlaufenden C-Schiene der Profile 2 lassen sich Ladungen oder Geräte befestigen. Erkennbar sind der geschraubte Aufbau der ISO-Ecke 10 und der Bodenaufbau aus den Elementen 2, 3, 4 und aus Laufflächen. Die Ecke 10 besteht hier aus zwei "Dreiflächern", die zusammen einen Würfel bilden. Das innere Element weist auf jeder Fläche 4 Schraublöcher auf, um je ein Hohlprofil 1 mit den Schraubkanälen 1a zu befestigen.

Figur 17 zeigt einen vergrößerten Ausschnitt der Ausführung der Figur 14 mit schwingfähigem Boden, der aus den Elementen 2, 3, 5 und der Bodenfüllung 18 besteht. Der Boden ist über schwingfähige Elemente 19 über frei wählbare Befetigungspunkte 19a an den Hohlprofilen 1 befestigbar. Strichpunktiert ist eine variable C-Schienen-Anordnung 16 gezeigt.

**Patentansprüche**

1. Mehrzweckpalette zum Transport auf Lastkraftwagen, enthaltend einen ebenen oder einen quaderförmigen Metallrahmen aus ISO-Ecken und Kantenprofilen, **dadurch gekennzeichnet**, daß die Kantenprofile vierkantige Hohlprofile (**1**) sind, die zumindest auf den nach innen gerichteten Seiten C-Schienen aufweisen und vier in Längsrichtung integrierte Schraubkanäle (**1a**) enthalten, und daß die den selbsttragenden Rahmen bildenden ISO-Ecken und Hohlprofile (**1**) über die Schraubkanäle (**1a**) miteinander verschraubt sind.

2. Mehrzweckpalette nach Anspruch 1, **dadurch gekennzeichnet,** daß die Hohlprofile (**1**) an allen vier Seiten C-Schienen haben.

3. Mehrzweckpalette nach einem der vorhergehenden Ansprüche, **gekennzeichnet durch** in Wände, Decken oder Boden einschraubbare, auf mindestens einer Schmalseite C-Schiene enthaltende schmale Profile (**2**).

4. Mehrzweckpalette nach einem der vorhergehenden Ansprüche, **gekennzeichnet durch** h-förmige Randprofile (**3**), zum Tragen des Bodens, der Decke oder der Wände, die C-Schienen enthalten.

5. Mehrzweckpalette nach einem der vorhergehenden Ansprüche, **gekennzeichnet durch** flache C-Schienenprofile (**4, 5**) mit Abdeckungen (**6**) für die C-Schienen.

6. Mehrzweckpalette nach einem der vorhergehenden Ansprüche, **gekennzeichnet durch** Kufen (**7**), die auf ihrer Oberseite oder auf ihren Seitenflächen C-Schienen enthalten.

7. Mehrzweckpalette nach Anspruch 6, **gekennzeichnet durch** Winkelteile (**8**) zum Befestigen der Kufen (**7**).

8. Mehrzweckpalette nach einem der vorhergehenden Ansprüche, **gekennzeichnet durch** eine Abdeckplane.

9. Mehrzweckpalette nach einem der vorhergehenden Ansprüche, **gekennzeichnet durch** plattenförmige Wand- und Deckenelemente, die C-Schienen enthalten können.

10. Mehrzweckpalette nach einem der vorhergehenden Ansprüche, **gekennzeichnet durch** abnehmbar oder klappbare Auffahrrampen, die C-Schienen enthalten können.

11. Mehrzweckpalette nach einem der vorhergehenden Ansprüche, **gekennzeichnet durch** Markisen an der Oberkante.

12. Mehrzweckpalette nach einem der vorhergehenden Ansprüche, **gekennzeichnet durch** teilweise oder vollständig abklappbare Seitenwänden, die C-Schienen enthalten können.

13. Mehrzweckpalette nach einem der vorhergehenden Ansprüche, **gekennzeichnet durch** einen abgetrennten geschlossenen Raumteil und einen offenen Raumteil, der mit einer Plane oder einer Deckplatte geschlossen sein kann.

14. Mehrzweckpalette nach einem der vorhergehenden Ansprüche, **gekennzeichnet durch** ein Dach (Plane oder Festdach), das über die Grundfläche der Palette hinaus ausstellbar ist.

15. Mehrzweckpalette nach einem der vorhergehenden Ansprüche, **gekennzeichnet durch** niedrige Bordwände, die C-Schienen enthalten können.

16. Mehrzweckpalette nach einem der vorhergehenden Ansprüche, **gekennzeichnet durch** einen schwingungsgedämpften Boden.

17. Mehrzweckpalette nach einem der vorhergehenden Ansprüche, **gekennzeichnet durch** Aufnahmemittel, wodurch die Palette an einem Haken oder einem entsprechenden Bauteil eines an sich bekannten Containeraufnahmesystems befestigbar ist.

**Claims**

1. Multi-purpose pallet for transport on heavy goods vehicles, incorporating a flat or cuboid-shaped metal frame comprised of ISO-corners and edge profiles, characterised in that the edge profiles are square hollow profiles (1), which have, at least on the sides thereof that face inwards, C-shaped rails and contain four longitudinally integrated screw channels (1a), and in that the ISO-corners and hollow profiles (1) forming the self-supporting frame are screwed to one another via the screw channels (1a).

2. Multi-purpose pallet according to claim 1, characterised in that the hollow profiles (1) have C-shaped rails on all four sides.

3. Multi-purpose pallet according to one of the preceding claims, characterised in that it has narrow profiles (2), which may be screwed into walls, ceilings or floors and which have a C-shaped rail on at least one narrow side.

4. Multi-purpose pallet according to one of the preceding claims, characterised in that it has H-shaped edge profiles (3), for supporting the floor, ceiling or walls which incorporate C-shaped rails.

5. Multi-purpose pallet according to one of the preceding claims, characterised in that it has flat C-shaped rail profiles (4,5) with covers for the C-shaped rails.

6. Multi-purpose pallet according to one of the preceding claims, characterised in that it has runners (7), which have C-shaped rails on their upper surface or their side surfaces.

7. Multi-purpose pallet according to claim 6, characterised in that it has angled parts (8) for securing the runners (7).

8. Multi-purpose pallet according to one of the preceding claims, characterised in that it has a tarpaulin.

9. Multi-purpose pallet according to one of the preceding claims, characterised in that it has plate-like wall and ceiling elements, which may incorporate C-shaped rails.

10. Multi-purpose pallet according to one of the preceding claims, characterised in that it has removable or foldable run-up ramps, which may incorporate C-shaped rails.

11. Multi-purpose pallet according to one of the preceding claims, characterised in that it has awnings at the upper edge.

12. Multi-purpose pallet according to one of the preceding claims, characterised in that it has partially or completely detachable side walls, which may incorporate C-shaped rails.

13. Multi-purpose pallet according to one of the preceding claims, characterised in that it has a separated, closed room section and an open room section, which may be closed by means of a tarpaulin or a cover plate.

14. Multi-purpose pallet according to one of the preceding claims, characterised in that it has a roof (tarpaulin or solid roof), which may be erected over the base surface of the pallet.

15. Multi-purpose pallet according to one of the preceding claims, characterised in that it has low edge walls, which may incorporate C-shaped rails.

16. Multi-purpose pallet according to one of the preceding claims, characterised in that it has a floor damped against vibration.

17. Multi-purpose pallet according to one of the preceding claims, characterised in that it has a take-up means, whereby the pallet may be secured to a hook or to an appropriate component of a container pick-up system which is known per se.

**Revendications**

1. Palette à usages multiples pour le transport sur des camions, comprenant un cadre métallique plan ou parallélépipédique constitué de coins ISO et de profilés de rive, **caractérisée en ce que** les profilés de rive sont des profilés creux carrés (1) qui comportent au moins sur les côtés dirigés vers l'intérieur, des rails en C et des canaux de vissage (1a) intégrés dans le sens longitudinal, et que les coins ISO et les profilés creux (1) formant le cadre autoporteur sont vissés les uns avec les autres par l'intermédiaire des canaux de vissage (1a)

2. Palette à usages multiples selon la revendication 1, caractérisée en ce que les profilés creux (1) présentent des rails en C sur les quatre côtés.

3. Palette à usages multiples selon l'une quelconque des revendications précédentes, caractérisée en ce qu'elle comprend sur au moins un petit côté avec rail en C, des profilés étroits (2) pouvant être vissés dans des parois, plafonds ou fonds.

4. Palette à usages multiples selon l'une quelconque des revendications précédentes, caractérisée en ce qu'elle comprend des profilés latéraux (3) en forme de h pour le support du fond, du plafond ou des parois, qui sont munis de rails en C.

5. Palette à usages multiples selon l'une quelconque des revendications précédentes, caractérisée en ce qu'elle comprend des profilés de rails en C plats (4, 5) avec des recouvrements (6) pour les rails en C.

6. Palette à usages multiples selon l'une quelconque des revendications précédentes, caractérisée en ce qu'elle est équipée de patins (7) munis sur leur surface supérieure ou sur leurs faces latérales de rails en C.

7. Palette à usages multiples selon la revendication 6, caractérisée en ce qu'elle comprend des cornières (8) pour la fixation des patins (7).

8. Palette à usages multiples selon l'une quelconque des revendications précédentes, caractérisée en ce qu'elle comprend une bâche de recouvrement.

9. Palette à usages multiples selon l'une quelconque des revendications précédentes, caractérisée en ce qu'elle comprend des éléments de paroi ou de plafond qui peuvent être munis de rails en C.

10. Palette à usages multiples selon l'une quelconque des revendications précédentes, caractérisée en ce qu'elle comprend des rampes d'accès amovibles ou repliables qui peuvent être munies de rails en C.

11. Palette à usages multiples selon l'une quelconque des revendications précédentes, caractérisée en ce qu'elle présente des stores sur le bord supérieur.

**12.** Palette à usages multiples selon l'une quelconque des revendications précédentes, caractérisée en ce qu'elle comprend des parois latérales partiellement ou entièrement rabattables qui peuvent être munies de rails en C.

**13.** Palette à usages multiples selon l'une quelconque des revendications précédentes, caractérisée en ce qu'elle comprend un compartiment fermé séparé et un compartiment ouvert qui peut être fermé par une bâche ou une plaque de recouvrement.

**14.** Palette à usages multiples selon l'une quelconque des revendications précédentes, caractérisée en ce qu'elle comprend un toit (bâche ou toit fixe) qui peut être étendu au-delà de la surface de base de la palette.

**15.** Palette à usages multiples selon l'une quelconque des revendications précédentes, caractérisée en ce qu'elle comprend des bordages de faible hauteur lesquels peuvent être munis de rails en C.

**16.** Palette à usages multiples selon l'une quelconque des revendications précédentes, caractérisée en ce qu'elle comprend un fond amortisseur de vibrations.

**17.** Palette à usages multiples selon l'une quelconque des revendications précédentes, caractérisée en ce qu'elle comprend des moyens de préhension par lesquels la palette peut être fixée sur un crochet ou sur un élément correspondant d'un système de levage de conteneurs bien connu en soi.

*Fig. 1*

# Fig. 2

Fig. 3

Fig. 4

Fig. 5

Fig.6

Fig.7

Fig.8

Fig. 9

Fig. 10

Fig. 11

Fig. 12

Fig. 13

Fig. 14

1

10

7

Fig. 15

15

16

Fig. 16

Fig. 17

EP 0 294 782 B1